# EUROPEAN PATENT APPLICATION

(11) **EP 3 232 073 A1**
(43) Date of publication of application: **18.10.2017**
(21) Application number: 15866916.8
(22) Date of filing: 28.10.2015
(51) Int. Cl.: F16C 33/66, F16C 19/16, F16C 19/54, F16C 33/64, F16N 7/38, F16N 9/02

(54) **BEARING DEVICE**

(30) Priority: 08.12.2014 JP 2014248307; 29.09.2015 JP 2015191192
(71) Applicant: NSK Ltd., Tokyo 141-8560 (JP)
(72) Inventor: KATSUNO Yoshiaki, Fujisawa-shi Kanagawa 251-8501 (JP)
(74) Representative: Grünecker Patent- und Rechtsanwälte PartG mbB
(86) International application number: PCT/JP2015/080464
(87) International publication number: WO 2016/092966

(57) **Abstract**

A tapered outer circumferential surface (14c) is formed on an inner race (14). Said tapered circumferential surface (14c) is inclined in a direction such that the diameter decreases as distance from the inner raceway surface (14a) increases. The small diameter end thereof is located to the outside, in the axial direction, of an axial direction end face (15c) of the outer race (15) and enters the internal diameter side of an outer race spacer (12). The outer race spacer (12) comprises a lubricant reservoir (19) and an oiling hole (20) that is in communication with said lubricant reservoir (19) and opens onto the tapered circumferential surface (14c). A lubricant such as grease (G) is enclosed in the bearing space (S). A lubricating oil- and wax-comprising wax lubricant (W) that can change, with a liquefaction point, which is a prescribed temperature in the temperature range of 10-70°C, as the boundary, between a liquid state above the liquefaction point and a semi-solid state at or below the liquefaction point is enclosed in the lubricant reservoir (19).

## Description

### TECHNICAL FIELD

The present invention relates to a bearing device, and more specifically, to a bearing device capable of being stably lubricated for a long time by a wax-based lubricant.

### RELATED ART

In recent years, since speed-up of a spindle device for a machine tool has been remarkably developed and environmental measure, energy saving and resource saving have been also strongly needed, grease lubrication has attracted attention as a lubrication method of a bearing. As the grease lubrication, a lubrication method of using grease enclosed in a bearing space upon incorporation of the bearing and a lubrication method of replenishing grease from a grease replenishment means provided outside a housing at an appropriate timing have been known.

For example, in a spindle device disclosed in Patent Document 1, a slight amount of grease is replenished at an appropriate timing into a bearing space of a rolling bearing from a grease replenishment means provided outside a housing through a grease supply pipe and a grease supply path formed in the housing. Also, in the spindle device, in order to secure an oil film of the bearing, the housing is formed therein with a cooling passage, and a cooling means cools a motor stator to cool the rolling bearing.

Also, as the bearing of the related art that is to be lubricated by the grease, a grease reservoir component and a rolling bearing where the grease reservoir component is separated from the rolling bearing and is arranged in the vicinity of a fixed-side bearing ring have been disclosed (for example, refer to Patent Document 2). As shown in FIG. 10, a grease reservoir component 100 disclosed in Patent Document 2 includes an annular vessel part 101 of which an inside becomes a grease reservoir 102 and an in-bearing insertion part 103 protruding from the vessel part 101 and inserted to a part adjacent to a raceway surface 111 a of a fixed-side bearing ring 111 of a rolling bearing 110. The in-bearing insertion part 103 is provided at its tip end with a base oil exudation port 104, and grease G accommodated in the vessel part 101 is supplied from the base oil exudation port 104 to the rolling bearing 110.

### Citation List

### Patent Documents

Patent Document 1: Japanese Patent No. 4,051,563B
Patent Document 2: Japanese Patent Application Publication No. 2008-240828A

### SUMMARY OF THE INVENTION

### Problems To Be Solved

The grease includes base oil, a thickening agent and an additive. In the method of replenishing the grease from an outside, in the cases where relatively rigid grease of which a numerical value of a penetration is small is used, a piping path in the housing is long, the piping path is bent on the way, there are portions bent at right angle at some places, and the like, when the thickening agent is gradually solidified, the grease may be difficult to be dispensed to the bearing due to a piping resistance, in some cases. Also, it is necessary to form a supply path in the housing or to separately provide a grease replenishment device so as to supply the grease from the outside of the housing to the inside of the bearing, which is disadvantageous to the cost.

The grease reservoir component 100 and the rolling bearing 110 disclosed in Patent Document 2 are configured by a combination of a plurality of components having a complex structure, which increases the manufacturing cost. Also, upon the supply of the grease G, the base oil separated from the grease G is supplied from the grease base oil exudation port 104 by using pressure variation resulting from a heat cycle in the grease reservoir 102, which is caused in association with operation and stop of the rolling bearing 110. For this reason, in the high-speed rotation utility (dmn: 500,000 or greater, more preferably dmn: 1,000,000 or greater) such as a bearing for a main shaft of a machine tool, the lubrication may not be sufficiently secured only with the pressure variation resulting from the heat cycle.

The present invention has been made in view of the above situations, and an object thereof is to provide a bearing device that can be stably lubricated for a long time by enclosing therein a wax-based lubricant capable of changing between a semi-solid state of a paste state and a liquid state by a surrounding temperature, instead of using the grease of the related art.

### Means for Solving Problems

The above object of the present invention is accomplished by following configurations.
(1) A bearing device including:
   a rolling bearing including an inner ring having an inner raceway surface on an outer peripheral surface thereof, an outer ring having an outer raceway surface on an inner peripheral surface thereof, and a plurality of rolling elements arranged to be freely rollable between the inner raceway surface and the outer raceway surface, a lubricant being enclosed in a bearing space between the outer peripheral surface of the inner ring and the inner peripheral surface of the outer ring, and
   an outer ring spacer arranged to be in contact with an axial end face of the outer ring,
   wherein at least one of the inner ring and an inner ring spacer arranged to be in contact with an axial end face of the inner ring is formed with a tapered outer peripheral surface, the tapered outer peripheral surface is inclined in a direction in which a diameter thereof decreases as a distance from the inner raceway surface increases, and a small diameter-side end portion thereof is located at an outer side, in an axial direction, of the axial end face of the outer ring and enters an inner diameter-side of the outer ring spacer,
   wherein the outer ring spacer includes a lubricant reservoir and an oil feeding passage configured to communicate with the lubricant reservoir and to open towards the tapered outer peripheral surface, and
   wherein a wax-based lubricant, which includes lubricating oil and wax and is changeable, with a liquefaction point, which is a predetermined temperature within a temperature range of 10 to 70 degrees Celsius, as a boundary, between a liquid state above the liquefaction point and a semi-solid state at or below the liquefaction point, is enclosed in the lubricant reservoir.
(2) The bearing device of the above (1), wherein the oil feeding passage is configured by an oil feeding hole of the outer ring spacer.
(3) The bearing device of the above (I), wherein the oil feeding passage is configured by a slit extending in the circumferential direction.
(4) The bearing device of one of the above (1) to (3), wherein a labyrinth gap through which the wax-based lubricant can freely circulate is formed between an inner peripheral surface of the outer ring spacer and the tapered outer peripheral surface, and
   wherein the wax-based lubricant is supplied from the oil feeding passage into the bearing space through the labyrinth gap.
(5) The bearing device of one of the above (1) to (4), wherein the wax-based lubricant is reversibly changeable between the liquid state and the semi-solid state, with the liquefaction point as a boundary.
(6) The bearing device of one of the above (1) to (5), wherein other wax-based lubricant, which includes lubricating oil and wax, has a liquefaction point higher than the highest temperature of the rolling bearing, which is assumed upon operation of the bearing device, and is changeable between a liquid state above the liquefaction point and a semi-solid state at or below the liquefaction point, is enclosed in the bearing space.
(7) The bearing device of one of the above (1) to (5), wherein grease is enclosed in the bearing space, and
   wherein the grease includes base oil having affinity and infiltration with the wax-based lubricant.

In the meantime, the term "wax-based lubricant" defined in Claim 1 indicates a lubricant including lubricating oil and wax, and the term "liquefaction point" indicates a temperature at which the wax-based lubricant changes from a semi-solid state to a liquid state or from the liquid state to the semi-solid state. Also, the term "liquefaction point" conforms to Article 69(2) (definition of liquid state) of Miscellaneous Provisions of Chapter 12 of Rules on Regulation of Hazardous Objects, in Japan, for example.

### Effects of the Invention

According to the bearing device of the present invention, at least one of the inner ring and the inner ring spacer arranged to be in contact with the axial end face of the inner ring is formed with the tapered outer peripheral surface, the tapered outer peripheral surface is inclined in the direction in which the diameter thereof decreases as the distance from the inner raceway surface increases, and the small diameter-side end portion thereof is located at the outer side, in the axial direction, of the axial end face of the outer ring and enters the inner diameter-side of the outer ring spacer. Also, the outer ring spacer includes the lubricant reservoir and the oil feeding passage configured to communicate with the lubricant reservoir and to open towards the tapered outer peripheral surface. The wax-based lubricant, which includes the lubricating oil and the wax and can change, with the liquefaction point, which is a predetermined temperature within the temperature range of 10 to 70 degrees Celsius, as a boundary, between the liquid state above the liquefaction point and the semi-solid state at or below the liquefaction point, is enclosed in the lubricant reservoir. Thereby, the wax-based lubricant is liquefied on the basis of a bearing temperature that changes depending on a load of the rolling bearing, and the wax-based lubricant is moved from the oil feeding passage into the bearing space by a centrifugal force, which is to be applied to the wax-based lubricant attached to the tapered outer peripheral surface, and a negative pressure effect, which is caused due to a difference of peripheral speeds resulting from a difference of large and small diameters of the tapered outer peripheral surface. Therefore, it is possible to lubricate the rolling bearing by the most appropriate amount of lubricating oil, so that it is possible to remarkably prolong the lubrication lifetime of the rolling bearing.

### BRIEF DESCRIPTOIN OF THE DRAWINGS

FIG. 1 is a sectional view of main parts of a spindle device in which a bearing device in accordance with a first embodiment of the present invention is incorporated.
FIG. 2 is a sectional view of the bearing device in accordance with the first embodiment of the present invention.
FIG. 3 is a sectional view of a bearing device in accordance with a modified embodiment of the first embodiment.
FIG. 4 is a sectional view of a bearing device in accordance with a second embodiment of the present invention.
FIG. 5 is a partial side view of an outer ring spacer of FIG. 4, as seen from a radially outer side.
FIG. 6 is a sectional view of main parts of a spindle device in which a bearing device in accordance with a third embodiment of the present invention is incorporated.
FIG. 7 is a sectional view of the bearing device in accordance with the third embodiment of the present invention.
FIG. 8 is a sectional view of a bearing device in accordance with a fourth embodiment of the present invention.
FIG. 9 illustrates a liquefaction point.

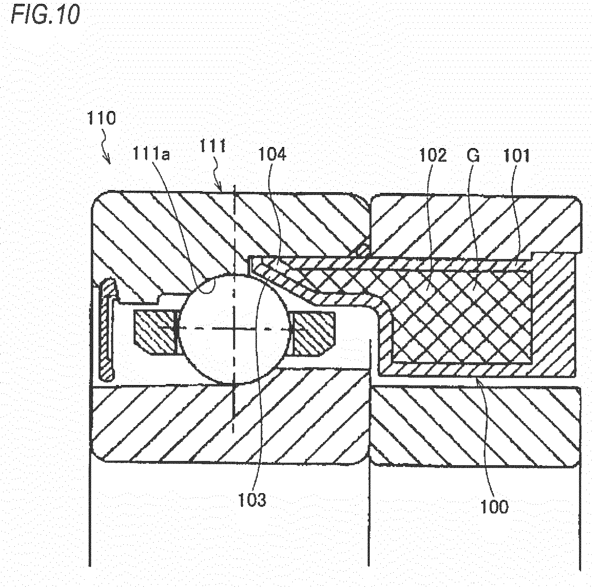

FIG. 10 is a sectional view of a bearing device of the related art.

### DETAILED DESCRIPTION OF EMBODIMENTS

Hereinafter, bearing devices in accordance with embodiments of the present invention will be described in detail with reference to the drawings.

### (First Embodiment)

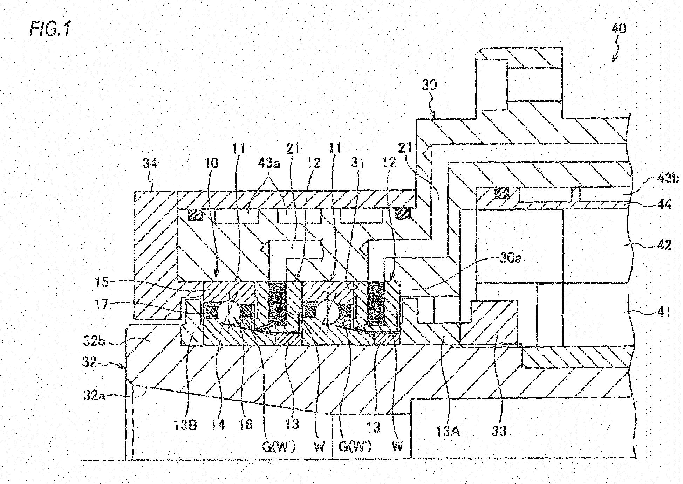

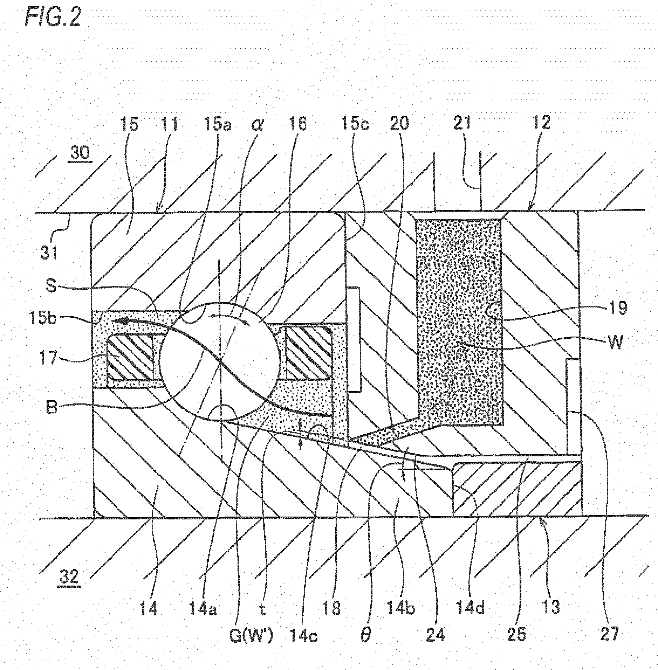

First, a bearing device in accordance with a first embodiment of the present invention is described with reference to FIGS. 1 and 2.

FIG. 1 is a sectional view of main parts of a spindle device 40 for a machine tool in which a bearing device 10 in accordance with the first embodiment of the present invention is incorporated. In the spindle device 40, a main shaft 32 is rotatably supported by a pair of angular ball bearings 11 configured to support a front end portion of the main shaft 32 and a rolling bearing (not shown) configured to support a rear end portion of the main shaft 32. A tip end (tool-side) of the main shaft 32 is provided with a tapered hole 32a for mounting therein a cutting tool holder (not shown). A rotor 41 is externally fitted to an axial center of the main shaft 32. A stator 42 arranged around the rotor 41 is fixed to a housing 30 via a cooling jacket 44. By feeding power to the stator 42, the rotor 41 is rotated to rotate the main shaft 32.

As shown in FIG. 2, the pair of angular ball bearings 11 has, respectively, an inner ring 14 having an inner raceway surface 14a on an outer peripheral surface thereof, an outer ring 15 having an outer raceway surface 15a on an inner peripheral surface thereof, and a plurality of balls 16 held in a retainer 17 and arranged to be freely rollable between the inner raceway surface 14a and the outer raceway surface 15a with a predetermined contact angle α. The inner peripheral surface at an axially outer side of the outer ring 15 is provided with a counterbore 15b.

The inner rings 14 of the pair of angular ball bearings 11 are externally fitted to the main shaft 32, are positioned with respect to a tip end-side large diameter step portion 32b of the main shaft 32 by using first inner ring spacers 13, 13 and positioning sleeves 13A, 13B arranged in the vicinity of the respective inner rings 14, and are fastened and fixed to the main shaft 32 by an inner ring fixing nut 33. Also, the outer rings 15 of the pair of angular ball bearings 11 are internally fitted to an attachment hole 31 of the housing 30, are positioned with respect to an inwardly facing step portion 30a of the housing 30 by using outer ring spacers 12, 12 arranged in the vicinity of the respective outer rings 15, and are positioned and fixed in the housing 30 by an outer ring retaining member 34.

In the meantime, the angular ball bearing 11 and the outer ring spacer 12 arranged in the vicinity of the outer ring 15 of the angular ball bearing 11 configure the bearing device 10 of the first embodiment.

The housing 30 and the cooling jacket 44 are provided at outer peripheral parts thereof corresponding to the pair of angular ball bearings 11 and the stator 42 with refrigerant supply paths 43a, 43b for cooling the angular ball bearings 11 and the stator 42. The pair of angular ball bearings 11 and the stator 42 are respectively configured to be cooled by refrigerant, which is to be supplied from a refrigerant supply device (not shown) to the refrigerant supply paths 43a, 43b, so that temperatures thereof are controlled.

Herein, the inner ring 14 of the first embodiment is formed with an extension portion 14b at one end side (a right side in FIG. 2) in the axial direction with respect to the inner raceway surface 14a, and an outer peripheral surface of the extension portion 14b is configured as a tapered outer peripheral surface 14c inclined in a direction in which a diameter decreases as a distance from the inner raceway surface 14a increases. A small diameter-side end portion of the extension portion 14b having the tapered outer peripheral surface 14c is located at an outer side, in the axial direction, of the axial end face 15c of the outer ring 15 and enters an inner diameter-side of the outer ring spacer 12.

The tapered outer peripheral surface 14c is a smooth surface of which an entire surface roughness is 0.8 µmRa or smaller. Also, an inclined angle θ of the tapered outer peripheral surface 14c is set to 3° or greater so that a lubricant attached to the tapered outer peripheral surface 14c is to be efficiently sent towards the inner raceway surface 14a on the basis of a centrifugal force. However, when the inclined angle is excessively set great, a radial thickness of the inner ring 14 excessively increases, so that a pitch circle diameter of the angular ball bearing 11 increases too much. Therefore, a maximum value of the inclined angle θ is set to 30°.

The first inner ring spacer 13 has an outer peripheral surface, which is a cylindrical surface, faces the outer ring spacer 12 and is in contact with an axial end face 14d of the extension portion 14b of the inner ring 14,

The outer ring spacer 12 is arranged to be in contact with an axial end face 15c of the outer ring 15 opposite to the counterbore. An inner peripheral surface of the outer ring spacer 12 is configured by a combination of a conical concave surface 24 and a cylindrical surface 25. At an assembled state of the bearing device 10, the conical concave surface 24 is located at a diametrically outer side of the extension portion 14b of the inner ring 14, and is inclined in a direction in which the conical concave surface faces towards the diametrically outer side as it comes closer to the angular ball bearing 11. The cylindrical surface 25 is located at a diametrically outer side of the inner ring spacer 13.

A diameter of the inner peripheral surface of the outer ring spacer 12 is slightly greater than diameters of the outer peripheral surfaces of the inner ring 14 and the inner ring spacer 13 at axially corresponding parts (part of which axial phases are the same). Therefore, a labyrinth gap 18 through which the lubricant can freely circulate is formed between the tapered outer peripheral surface 14c and the conical concave surface 24. A radial distance t (perpendicular to the axial direction) of the labyrinth gap 18 is preferably set to about 0.15 to 1.0mm so as to smoothly supply the lubricant into the angular ball bearing 11 along the tapered outer peripheral surface 14c, considering interference between the outer ring spacer 12 and the inner ring 14 and component processing precision.

In the meantime, since a gap between the cylindrical surface 25 and the outer peripheral surface of the inner ring spacer 13 is required so as only to prevent interference between the outer ring spacer 12 and the inner ring spacer 13, the gap is unnecessary from a standpoint of the lubrication. Therefore, a thickness of the gap is preferably set as small as possible.

Also, a lubricant reservoir 19 for holding a wax-based lubricant W is provided inside the outer ring spacer 12. A shape of the lubricant oil reservoir 19 is arbitrarily formed but is annularly formed in the first embodiment so as to increase a volume for holding the lubricant.

At the assembled state of the bearing device 10, an opening of a base end portion (an upper end portion in FIG. 2) of the lubricant reservoir 19 existing on the outer peripheral surface of the outer ring spacer 12 gets into alignment with an opening of a downstream end of an air passage 21 opening towards an inner peripheral surface of the attachment hole 31 of the housing 30.

Also, the outer ring spacer 12 has an oil feeding hole 20 as an oil feeding passage configured to communicate with the lubricant reservoir 19 and to open towards the tapered outer peripheral surface 14c. A tip end opening of the oil feeding hole 20 faces an intermediate part of the tapered outer peripheral surface. Also, the oil feeding hole 20 is inclined towards a large diameter-side of the tapered outer peripheral surface 14c, so that the wax-based lubricant W dispensed from the oil feeding hole 20 tends to move towards the large diameter-side of the tapered outer peripheral surface 14c by the momentum of the dispensing, too. A size of the oil feeding hole 20 is preferably set to about φ0.5mm to φ3.0mm but may be appropriately changed depending on an amount of the lubricating oil to flow out.

Also, the oil feeding hole 20 may be provided at one place in a circumferential direction or may be provided in plural at equally spaced intervals.

Also, an axial side surface of the cylindrical surface 25-side is formed with a concave portion 27 over an entire circumference from the cylindrical surface 25 to a radially outer side so that the outer ring spacer 12 is not to interfere with the inner ring 14 of the adjacent angular ball bearing 11.

When incorporating the bearing device 10 into the housing 30, an appropriate amount of grease G is enclosed in a bearing space S the outer peripheral surface of the inner ring 14 and the inner peripheral surface of the outer ring 15 of the angular ball bearing II. However, in the first embodiment, an appropriate amount of wax-based lubricant W is further enclosed in the lubricant reservoir 19.

As the grease G that is to be enclosed in the bearing space S, a usual grease can be used. However, a grease having affinity and infiltration with the wax-based lubricant W, for example, a grease including base oil having the same component as the lubricating oil of the wax-based lubricant W is preferably used. An amount of the grease G that is to be enclosed in the bearing space S is preferably 10 to 20% of a space volume of the bearing space S because of a balance between temperature rising due to a viscosity resistance resulting from the rotation and lifetime of the grease. Thereby, it is possible to shorten adaptation operating time and return time to a manufacturing line after bearing replacement.

As the wax-based lubricant W that is to be enclosed in the lubricant reservoir 19, a lubricant that includes lubricating oil and wax, as basic components, and can change, with a liquefaction point, which is a predetermined temperature within a temperature range of 10 to 70°C (degrees Celsius), as a boundary, between a liquid state above the liquefaction point and a semi-solid state at or below the liquefaction point can be used. Also, preferably, the wax-based lubricant W is adjusted to reversibly change between the liquid state and the semi-solid state, with the liquefaction point as a boundary.

The wax is solidified or semi-solidified at a temperature below a melting point thereof and becomes a liquid and has flowability at a temperature at or above the melting point. Like this, if the wax is a single component, it reversibly changes between the semi-solid state and the liquid state with a temperature close to the melting point of wax as a boundary, as a whole. In contrast, the wax-based lubricant W of the first embodiment is a mixture of the lubricating oil (liquid) and the wax (semi-solid) (a dilute solution where the lubricating oil (a diluting liquid) is added to the wax (solute)). For this reason, the wax-based lubricant W changes from the semi-solid state to the liquid state at a temperature below the melting point of wax. The liquefaction point at which the lubricant changes from the semi-solid state to the liquid state has a close relation with the melting point of wax to be included and a mixing ratio between the wax and the lubricating oil. That is, since "melting point of wax>liquefaction point", it is possible to control the liquefaction point to a predetermined temperature at or below the melting point of wax by a mixing ratio between the wax and the lubricating oil to be included. Specifically, it is possible to set a temperature difference between the liquefaction point and the melting point of wax to about 10 to 30°C by types of the lubricating oil and the wax and the mixing ratio therebetween. Also, the wax-based lubricant W can be made to reversibly change between the liquid state and the semi-solid state in accordance with the temperatures by adjusting the types of the lubricating oil and the wax, the mixing ratio therebetween and the like.

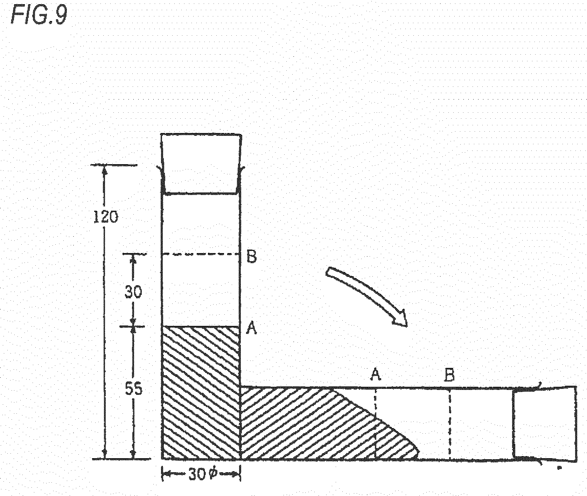

Meanwhile, in the present invention, the liquid and the liquefaction point are checked as shown in FIG. 9 and as described below. This method conforms to Article 69(2) (definition of liquid state) of Miscellaneous Provisions of Chapter 12 of Rules on Regulation of Hazardous Objects, in Japan.
(1) A test article (wax-based lubricant) is put to an A line (height 55mm) of two test tubes (a diameter 30mm, a height 120mm).
(2) One test tube (test tube for liquid determination) is closed by a rubber plug having no hole.
(3) The other test tube (test tube for temperature measurement) is tightly closed by a rubber plug having a thermometer attached thereto. In the meantime, the thermometer is inserted so that a tip end thereof is located at a depth of 30mm below a surface of the test article and is erected with respect to the test tube.
(4) The two test tubes are left to erectly stand in a constant temperature bath kept at liquid check temperature±0.1°C so that a B line (located at a position of 30 mm above the surface of the test article) is located below the water surface of the constant temperature bath.
(5) After the temperature of the test article in the test tube for temperature measurement becomes the liquid check temperature±0.1°C, the state is kept at it is.
(6) The test tube for liquid determination is taken out from the constant temperature bath onto a horizontal table with being erected, and immediately, is horizontally fell down onto the table, and the time for which the tip end of the test article reaches the B line is measured.
(7) When the time for which the tip end of the test article reaches the B line is within 90 seconds, it is determined that the test article is "liquid".
(8) The above processes (1) to (7) are performed while diversely changing the temperature of the constant temperature bath, and the temperature at which the test article becomes liquid is determined as "liquefaction point".

In the meantime, the liquefaction point is not a fixed temperature such as a solidification point of water (0°/pure water under atmospheric pressure) and is defined and digitized within a range of about ±2° with respect to any specific temperature.

Alternatively, when the temperature is gradually increased using a cone plate type viscometer (E type viscometer), a temperature at which the viscosity change is constant appears in the vicinity of the liquefaction point. Therefore, the corresponding temperature can be regarded as the liquefaction point.

As the lubricating oil that is to be applied to the wax-based lubricant W, all types of lubricating oil can be used, irrespective of whether the oil is synthetic oil or mineral oil and whether the oil is single component oil or mixed oil. As the synthetic oil, all types of ester-based, hydrocarbon-based, ether-based oils and the like can be used. Also, as the mineral oil, all types of paraffin-based, naphthene-based mineral oils and the like can be used.

The viscosity of the lubricating oil doesn't matter inasmuch as it is within a general range. However, the kinetic viscosity at 40°C is preferably 5 to 200mm²/s, considering the lubricating property of the bearing. Also, the kinetic viscosity of the lubricating oil is set depending on the utility of the bearing. For example, when it is intended to balance a low temperature-rising characteristic and a high seizure resistance, like a rolling bearing for a main shaft of a machine tool, the kinetic viscosity of 10 to 130mm²/s (40°C) is more preferable.

In the meantime, the wax is a solid or semi-solid at room temperatures and is an organic matter having an alkyl group. In the first embodiment, as the wax, all types of wax can be used, irrespective of whether the wax is natural wax or synthetic wax and whether the wax is single component wax or mixed wax. However, since the wax becomes a mixture with the lubricating oil in the bearing, wax having high compatibility with the lubricating oil is preferably used. As the natural wax, all types of animal and plant waxes, mineral wax and petroleum wax can be used. As the synthetic wax, Fisher-Tropsch wax, polyethylene wax, fat and oil-based synthetic wax (ester, ketone, amid), hydrogenated wax and the like can be exemplified.

As an example of a preferable combination of the lubricating oil and the wax, when ester oil is used as the lubricating oil, microcrystalline wax can be used as the wax, from the standpoint of compatibility.

Also, a mixing ratio of the lubricating oil and the wax is preferably wax 10 to 40 mass% and lubricating oil 90 to 60 mass% for a total amount of the lubricating oil and the wax. The greater the ratio of the wax, the flowability is deteriorated at the semi-solid state of the wax-based lubricant. When the ratio of the wax exceeds 40 mass%, the dispensing property from the lubricant supply device and the transportation property in a supply pipe are deteriorated. In particular, when it is considered that the flowability is important, preferably, the mixing ratio of the wax is set to a range of 10 mass% or greater and less than 20 mass% and the mixing ratio of the lubricating oil is set to a range of 90 mass% or less and more than 80 mass%. In the meantime, the wax may be added as an oiliness improver of the lubricating oil and the grease. However, in the wax-based lubricant of the first embodiment, the additive amount of the wax is set greater than a general additive amount, as described above, so that it is possible to keep a property (a function as a thickening agent) of the semi-solid state equivalent to the grease.

Also, a variety of additives may be added to the wax-based lubricant W, depending on purposes. For example, appropriate amounts of well-known antioxidant, antirust agent, extreme pressure agent and the like may be added.

In order to prepare the wax-based lubricant W, the wax is heated to the melting point or higher for liquefaction, and the lubricating oil or the lubricating oil having the additive added thereto is applied to the heated wax, which are then sufficiently mixed. Thereafter, the mixture is cooled to a temperature (usually, a temperature at or below the liquefaction point) below the melting point of wax. Alternatively, a method may be adopted in which the lubricating oil or the lubricating oil having the additive added thereto and the solid wax are put into a suitable vessel, which are heated and mixed to the melting point or higher of wax and then cooled to a temperature at or below the liquefaction point.

In the meantime, the wax-based lubricant W does not include the thickening agent, unlike the grease G, and has a property that it is not solidified even though a predetermined pressure is applied thereto.

Also, the liquefaction point of 10 to 70°C is appropriate, considering an environmental temperature of the bearing surrounding and the operating temperature of the bearing. However, when the application utility is a rolling bearing for a machine tool (a rolling bearing for a main shaft of a machine tool, a rolling bearing for support of a ball screw shaft end or the like), the liquefaction point is preferably 30 to 70°C, and more preferably 40 to 70°C. The reason is described, as follows.

Regarding the surrounding environment conditions at which a machine tool is to be used, the surrounding environment is air-conditioned to about 20 to 25 °C so as to suppress thermal displacement of a member associated with a change in the surrounding temperature to the minimum and to secure the processing precision of a component to be processed, in many cases. Therefore, when the lower limit of the liquefaction point is set to 30°C, the wax-based lubricant W is at the temperature at or below the liquefaction point at the stationary state, so that it is not liquefied and is kept in the bearing or at an oil reserving part. Even when the bearing or spindle in which the wax-based lubricant W is reserved is stopped or is stock-kept as it is stationary, since the wax-based lubricant is kept in the bearing and at the peripheral part thereof without being liquefied, the lubrication function is not deteriorated for a long time, like the usual grease. Therefore, the liquefaction point is preferably set to 30 to 70 °C.

Also, in the spindle device 40, the inside temperature of the angular ball bearing 11 increases as the number of rotations increases. Therefore, in order to keep the appropriate lubrication state, it is necessary to supply more lubricating oil to the rolling contact surface. In the case of a continuous operation at the usual rotation condition (rotation areas of low to medium speeds) or an operating condition of alternately repeating low speed rotation and highest speed rotation, the bearing temperature is usually 40°C or below, and an amount of the lubricating oil can be sufficiently secured by the lubricant in the vicinity of the rolling contact surface in the bearing space S.

However, in the case of the continuous processing at the highest speed rotation or when continuously performing heavy cutting processing even though the number of rotations is small, the bearing temperature may exceed 40°C. In this case, the lubricating oil on the rolling contact surface may not be sufficiently secured only by the lubricant in the bearing space S. For this reason, the lower limit of the liquefaction point is set to 40°C at which the wax-based lubricant W of the lubricant reservoir 19 is liquefied and the insufficient lubricating oil can be replenished to the rolling contact surface, so that it is possible to prevent an unexpected seizure problem and the like before happens. Thereby, in the rotation areas of low to medium speeds, it is possible to further improve the lubrication lifetime without consuming the surplus lubricant. Therefore, the liquefaction point is more preferably set to 40 to 70°C.

For example, as the wax-based lubricant W having the liquefaction point of 47°C, a lubricant including diester oil (dioctyl sebacate) 78.5 mass%, microcrystalline wax (melting point 82°C) 15 mass% and an additive 6.5 mass% including an antioxidant, an extreme pressure agent and the other may be exemplified.

Also, as the wax-based lubricant having the liquefaction point of 38°C, a lubricant including diester oil (dioctyl sebacate) 83 mass%, microcrystalline wax (melting point 72°C) 10.5 mass% and an additive 6.5 mass% including an antioxidant, an extreme pressure agent and the other may be exemplified.

Thereby, although the wax-based lubricant W is at the semi-solid paste state in the lubricant reservoir 19 before the operation of the main shaft or at the early stage of the operation, when the inside temperature of the bearing gradually increases (becomes the liquefaction point or above) as the main shaft operates, a part of the wax-based lubricant W communicating with the bearing space S in the vicinity of the bearing changes into liquid oil. The wax-based lubricant W attached to the tapered outer peripheral surface 14c slowly moves into the bearing space S of the angular ball bearing 11, thereby lubricating the angular ball bearing 11. After lubricating the angular ball bearing 11, when the wax-based lubricant is discharged from the angular ball bearing 11 and the temperature thereof is lowered, it again changes to the semi-solid paste state.

As described above, the liquefaction point of the wax-based lubricant W can be set to any temperature within the range of 10 to 70°C in conformity to the operating conditions of the angular ball bearing 11, i.e., the bearing temperature based on the use-results of the rotary machine to be applied, verification tests, durability evaluation tests and the like by adjusting the components of the wax-based lubricant W. For example, although the melting point of the microcrystalline wax is 67 to 98°C, the liquefaction point of the wax-based lubricant mixed on the basis of the mixing ratio with the lubricating oil can be set to 35 to 50°C. Also, although the melting point of the paraffin wax is 47 to 69°C, the liquefaction point of the wax-based lubricant mixed on the basis of the mixing ratio with the lubricating oil can be set to 20 to 35°C. Thereby, it is possible to continuously supply the optimum amount of the wax-based lubricant W into the angular ball bearing 11.

Also, in the spindle device 40, the angular ball bearing 11 is cooled by the refrigerant to be supplied to the refrigerant supply path 43a so as to improve the processing precision. In this case, the refrigerant is temperature-controlled so that even when the operating temperature (operating condition) of the angular ball bearing 11 is different, the temperature of the spindle device 40 except for the bearing inside and the vicinity of the bearing becomes the liquefaction point or below. Therefore, the temperature of the refrigerant is controlled depending on the operating temperature of the angular ball bearing 11, so that it is possible to change the appropriate amount of wax-based lubricant W into the oil of the liquid state and to supply the same to the angular ball bearing 11 without changing the wax-based lubricant W.

Meanwhile, in the angular ball bearing 11, the ball rotates with a contact angle line as an equatorial line. As a result, the ball expresses a pump effect, so that an air stream is generated in the space having the lubricant enclosed therein. For this reason, the wax-based lubricant W having favorable flowability is used, so that it is possible to prevent the lubricant from staying in the bearing, which in turn prevents the temperature rising of the bearing.

Subsequently, the operations of the bearing device 10 of the first embodiment are described.

The appropriate amount of grease G is enclosed in the bearing space S of the bearing device 10. The appropriate amount of wax-based lubricant W is enclosed in the lubricant reservoir 19. As described above, the grease G includes the base oil having the same component as the wax-based lubricant W, and has affinity and infiltration with the wax-based lubricant W. Also, as shown in FIG. 1, the angular ball bearing 11 and the surrounding thereof are temperature-controlled by the refrigerant supplied from the refrigerant supply device (not shown) and flowing in the refrigerant supply path 43a.

At an early stage of the operation of the spindle device 40 in which the internal temperature of the angular ball bearing 11 is relatively low, the angular ball bearing 11 is lubricated by the grease G enclosed in the bearing space S.

The base oil of the grease G is kept by the thickening agent having a fabric structure, and moves between fibers of the thickening agent by the capillary phenomena. Also, in the case of the high-speed rotation, like a spindle device of a machine tool, the temperature of the bearing surrounding increases, so that the temperature of the grease G in the neighborhood thereof also increases and the grease is liquefied. Therefore, the base oil can easily flow and the grease lifetime at the high-speed rotation is prolonged.

When the internal temperature of the angular ball bearing 11 gradually increases as the bearing device 10 operates, a temperature gradient of which the temperature gradually increases from the outer ring spacer 12 and the inner ring spacer 13 towards the angular ball bearing 11 occurs. Then, when a part, which is close to the angular ball bearing 11, of the wax-based lubricant W in the lubricant reservoir 19 reaches the liquefaction point, for example, 47°C, the liquefaction of the wax-based lubricant W starts and the wax-based lubricant W in the vicinity of the tip end of the oil feeding hole 20 is attached to the tapered outer peripheral surface 14c.

Then, the base oil of the wax-based lubricant W attached to the tapered outer peripheral surface 14c is gradually supplied to the angular ball bearing 11 by the centrifugal force action resulting from the rotation, the capillary action resulting from the labyrinth gap 18 and the negative pressure action due to the peripheral speed difference resulting from the difference of the large and small diameters of the tapered outer peripheral surface.

Also, since the housing 30 is formed with the air passage 21 configured to communicate with the lubricating oil reservoir 19 and to open outwards, it is possible to more effectively use the negative pressure action.

Also, in the angular ball bearing 11 having the counterbore 15b formed in the outer ring 15, a phenomenon (so-called, a pump action) that the air is sucked towards the counterbore 15b occurs (refer to an arrow B). Therefore, by the pump action of the angular ball bearing 11, the air stream flows, and the lubricating oil of the wax-based lubricant W liquefied in the lubricant reservoir 19 moves to the bearing space S. Thereby, the lubricating oil of the wax-based lubricant W is also provided for lubrication of the angular ball bearing 11.

Since the grease G in the bearing space S is not liquefied, it is possible to keep the grease lifetime in the usual grease lubrication. However, since the grease G lacks in flowability, the grease G that is to contribute to the lubrication of the angular ball bearing 11 is limited to the base oil component in the grease G nearest to the angular ball bearing 11. In contrast, when the wax-based lubricant W of the first embodiment is used, the wax-based lubricant W changes from the semi-solid state to the liquid state due to the heat generation and temperature rising of the angular ball bearing 11. Therefore, the lubricating oil of the wax-based lubricant W liquefied in the lubricant reservoir 19 infiltrates into the grease G in the angular ball bearing 11 and is gradually supplied into the angular ball bearing 11. Thereby, the oil is replenished from the wax-based lubricant W, so that it is possible to remarkably increase the lubrication lifetime.

Also, when the angular ball bearing 11 rotates at higher speed, more lubricating oil is required on a rolling contact part and a retainer guide surface. In the meantime, the temperature of the angular ball bearing 11 increases as it rotates at higher speed, and the heat is transferred to the outer ring spacer 12. Therefore, the ratio of the liquefaction of the wax-based lubricant W in the lubricant reservoir 19 increases. Also, when the angular ball bearing rotates at high speed, the centrifugal force action and the negative pressure effect due to the peripheral speed difference resulting from the difference of the large and small diameters of the tapered outer peripheral surface increase on the tapered outer peripheral surface 14c, so that more lubricating oil is supplied to the angular ball bearing 11. Thereby, the lubrication performance at the high-speed rotation of the angular ball bearing 11 is improved. That is, when the optimal liquefaction point is set in advance, it is possible to automatically control and replenish the appropriate amount of the lubricating oil corresponding to the rotating speed even though a command is not issued from an outside.

Also, when the liquefaction point is adjusted so that when the number of rotations reaches a predetermined number or greater of rotations, the wax-based lubricant W is liquefied and the lubricating oil is replenished, it is possible to increase the amount of lubricating oil that is to be supplied upon the high-speed rotation of the predetermined number or greater of rotations, so that the seizure resistance is improved. Also, upon the low-speed rotation in which much oil is not required, the replenishment of the lubricating oil is stopped, i.e., the liquefaction point is set to a higher temperature than the temperature of the bearing inside upon the low-speed rotation, and the liquefaction point is adjusted so that when the number of rotations reaches a specific number of rotations in which the lubricating oil is required, the wax-based lubricant W is liquefied and the lubricating oil is replenished. Thereby, it is possible to considerably increase the lubricant lifetime.

Also, when the bearing temperature falls within a predetermined range, such as a case where the operating temperature of the angular ball bearing 11 is relatively low and the cooling structure is not required or a case where the angular ball bearing is always to continuously operate at the constant number of rotations, the liquefaction point of the wax-based lubricant W is set in conformity to the assumed bearing temperature, so that it is possible to optimize the replenishment amount of the wax-based lubricant W and to prolong the lubrication lifetime.

Meanwhile, in the first embodiment, the grease G having affinity and infiltration with the wax-based lubricant W is enclosed in the angular ball bearing 11 (the bearing space). However, the other wax-based lubricant W' rather than the grease G may be enclosed in the angular ball bearing 11. In this case, when the liquefaction point of the other wax-based lubricant W' is set higher (for example, the liquefaction point 70°C) than the assumed highest operating temperature (for example, about max. 65°C) of the angular ball bearing 11, the other wax-based lubricant W' in the angular ball bearing 11 is always kept at the semi-solid state. That is, the other wax-based lubricant W' lubricates the angular ball bearing 11 while expressing the same behavior as the usual grease G.

If the liquefaction point of the other wax-based lubricant W' is set lower than the assumed highest operating temperature, the liquefaction of the other wax-based lubricant W' starts at a point of time at which the operating temperature exceeds the liquefaction point, so that the lubricant in the angular ball bearing 11 may be leaked outside. In this case, the other wax-based lubricant W' may contribute to only the initial lubrication in which the operating temperature is low. However, the liquefaction point of the other wax-based lubricant W' is set to a higher temperature than the highest operating temperature, so that the above problems can be avoided.

Also, the liquefaction point of the other wax-based lubricant W' is set to the higher temperature than the highest operating temperature, so that even when an unexpected situation (a sign of the seizure, for example) that the bearing temperature exceeds the assumed highest operating temperature and further increases beyond the liquefaction point occurs, the other wax-based lubricant W' is rapidly liquefied and functions as the lubricant of the bearing. That is, a so-called fail safe function is expressed.

As described above, according to the bearing device 10 of the first embodiment, the inner ring 14 is formed with the tapered outer peripheral surface 14c, the tapered outer peripheral surface 14c is inclined in the direction in which the diameter thereof decreases as the distance from the inner raceway surface 14a increases, and the small diameter-side end portion thereof is located at the outer side, in the axial direction, of the axial end face 15c of the outer ring 15 and enters the inner diameter-side of the outer ring spacer 12. Also, the outer ring spacer 12 includes the lubricant reservoir 19 and the oil feeding hole 20 configured to communicate with the lubricant reservoir 19 and to open towards the tapered outer peripheral surface 14c, and the wax-based lubricant, which includes the lubricating oil and the wax and can change, with the liquefaction point, which is a predetermined temperature within the temperature range of 10 to 70°C, as the boundary, between the liquid state above the liquefaction point and the semi-solid state at or below the liquefaction point, is enclosed in the lubricant reservoir 19. Thereby, the wax-based lubricant is liquefied on the basis of the bearing temperature, which changes depending on the load of the rolling bearing, and the wax-based lubricant W is moved from the oil feeding passage into the bearing space S by the centrifugal force, which is to be applied to the wax-based lubricant W attached to the tapered outer peripheral surface 14c, and the negative pressure effect, which is caused due to the difference of peripheral speeds resulting from the difference of the large and small diameters of the tapered outer peripheral surface 14c. Therefore, it is possible to lubricate the angular ball bearing 11 by the most appropriate amount of lubricating oil, so that it is possible to remarkably prolong the lubrication lifetime of the angular ball bearing 11.

By the air stream resulting from the pump action of the angular ball bearing 11, the lubricating oil of the wax-based lubricant W in the lubricant reservoir 19 moves into the bearing space S, so that it is possible to prolong the lubrication lifetime.

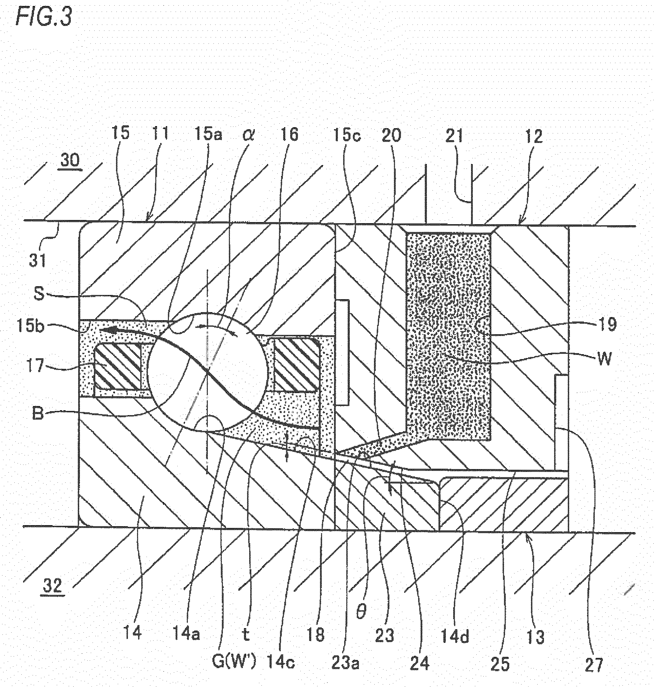

In the meantime, the tapered outer peripheral surface 14c of the first embodiment is configured by the inner ring 14 having the extension portion 14b. However, like a modified embodiment shown in FIG. 3, a configuration is also possible in which a second inner ring spacer 23 corresponding to the inner ring spacer of the present invention is provided between the inner ring 14 and the first inner ring spacer 13, instead of the extension portion 14b, and an outer peripheral surface of the inner ring spacer 23 may be configured as a tapered outer peripheral surface 23a continuing to the tapered outer peripheral surface 14c of the inner ring 14.

### (Second Embodiment)

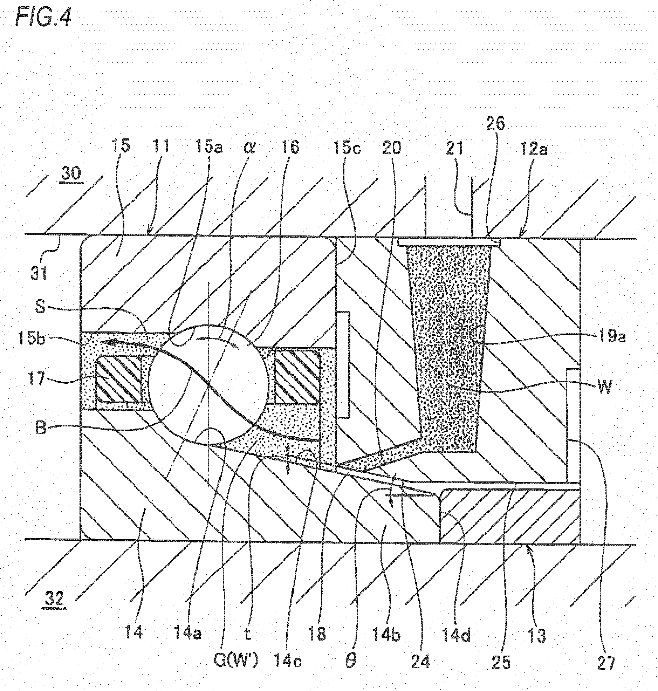

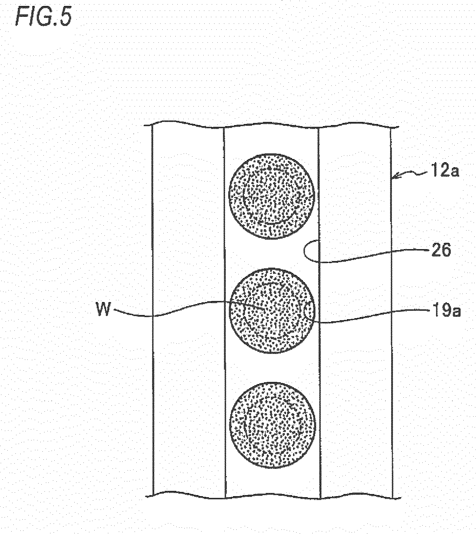

Subsequently, a bearing device of a second embodiment is described with reference to FIGS. 4 and 5.

In the bearing device 10 of the second embodiment, a plurality of lubricant reservoirs 19a opening towards an outer peripheral surface of an outer ring spacer 12a is formed at predetermined intervals in the circumferential direction. Each of the lubricant reservoirs 19a has a truncated conical shape inclined in a direction in which an inner diameter thereof decreases towards an inner diameter-side of the outer ring spacer 12. Also, a concave groove 26 is formed over an entire circumference at a part, which gets into alignment with an opening of an end portion of each lubricant reservoir 19a, of the outer peripheral surface of the outer ring spacer 12a. The air passage 21 provided in the housing 30 is configured to communicate with each lubricant reservoir 19a via the concave groove 26.

Also, like the bearing device 10 of the first embodiment, the wax-based lubricant W is enclosed in the lubricant reservoir 19a formed in the outer ring spacer 12a, and the grease G is enclosed in the bearing space S between the outer peripheral surface of the inner ring 14 and the inner peripheral surface of the outer ring 15. In the meantime, the other wax-based lubricant W' may also be enclosed in the bearing space S.

Therefore, the plurality of lubricant reservoirs 19a having a truncated conical shape is provided, like the second embodiment, so that it is possible to secure the axial stiffness of the outer ring spacer 12a, as compared to the annular lubricant reservoir 19 of the first embodiment. Thereby, when fixing the outer ring spacer 12a together with the outer ring 15 by the outer ring retaining member 34, it is possible to secure the adhesion stiffness between the outer ring spacer 12a and the outer ring 15 and to suppress axial deformation of the outer ring spacer 12a.

The other configurations and operational effects are the same as the first embodiment.

### (Third Embodiment)

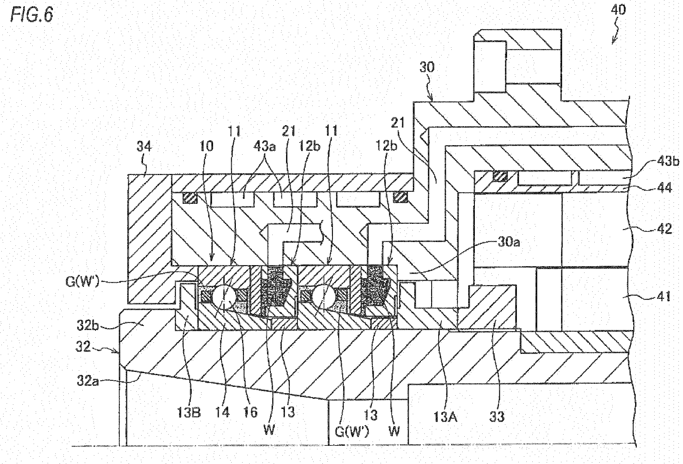

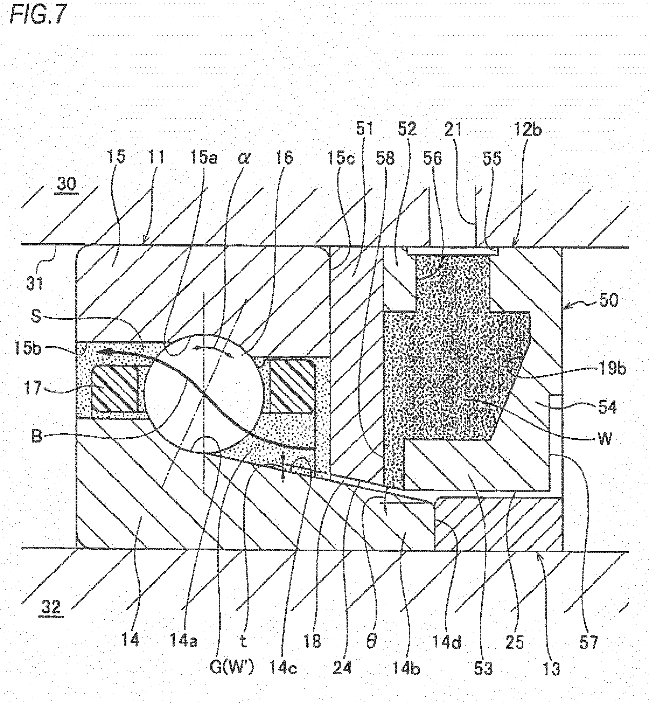

In the below, a bearing device of a third embodiment is described with reference to FIGS. 6 and 7.

In the third embodiment, an outer ring spacer 12b is configured by axially overlapping a main body 50 and a cover body 51. Base end edges (right end edges in FIG. 7) of an outer diameter-side cylindrical part 52 and an inner diameter-side cylindrical part 53 provided to be concentric with each other are continued by a circle ring part 54, so that the main body 50 has an entirely circular ring shape having a substantially U-shaped section of which a side is opened. In the meantime, an axial length of the outer diameter-side cylindrical part 52 is greater than an axial length of the inner diameter-side cylindrical part 53. Therefore, a tip end edge (a left end edge in FIG. 7) of the outer diameter-side cylindrical part 52 more slightly protrudes axially than a tip end edge of the inner diameter-side cylindrical part 53.

Also, an inner surface of the circle ring part 54 is inclined in a direction in which it becomes closer to the tip end edges of the respective cylindrical parts 52, 53 as a distance to the inner diameter-side decreases. Therefore, an axial width of the lubricating oil reservoir 19b between the circle ring part 54 and the cover body 51 decreases as it comes closer to the inner diameter-side. Also, a concave groove 55 is formed over an entire circumference at an intermediate part of the outer peripheral surface of the outer diameter-side cylindrical part 52, and a through-hole 56 is formed at a radially inner side of the concave groove 55. At a state where the outer ring spacer 12b configured as described above is mounted to the housing 30, the lubricant reservoir 19b communicates with the air passage 21 provided in the housing 30 through the through-hole 56 and the concave groove 55.

Meanwhile, in the shown example, a concave portion 57 is formed over an entire circumference from a base end portion of the inner diameter-side cylindrical part 53 to an inner diameter-side end portion of the outer surface of the circle ring part 54, so that the main body 50 does not interfere with the inner ring 14 of the adjacent angular ball bearing 11.

Thereby, the outer ring spacer 12b configured by axially overlapping the main body 50 and the cover body 51 is formed with a slit 58 serving as the oil feeding passage between a part close to an inner diameter of one surface of the cover body 51 and the tip end edge of the inner diameter-side cylindrical part 53, over the entire circumference. The slit 58 opens with facing the tapered outer peripheral surface 14c of the extension portion 14b of the inner ring 14.

Also, the inner peripheral surface of the inner diameter-side cylindrical part 53 configures the cylindrical surface 25, the inner peripheral surface of the cover body 51 configures the conical concave surface 24, and the labyrinth gap 18 is formed between the conical concave surface 24 and the tapered outer peripheral surface 14c.

Therefore, the outer ring spacer 12b having the main body 50 and the cover body 51 is provided, like the third embodiment, so that it is possible to secure the axial stiffness of the outer ring spacer 12b, as compared to the annular lubricant reservoir 19 of the first embodiment. Also, in the case of the outer ring spacer 12b of the third embodiment, it is possible to easily process the lubricant reservoir 19b and the slit 58 serving as the oil feeding passage, so that it is possible to save the cost. Also, the lubricant reservoir 19b of the third embodiment has the greater reserving volume than the lubricant reservoir 19a of the second embodiment.

The other configurations and operational effects are the same as the first embodiment.

In the meantime, the slit 58 of the third embodiment may be configured as slits provided at one or more places in the circumferential direction by setting the length of the tip end edge of the inner diameter-side cylindrical part 53 to be partially the same as the tip end edge of the outer diameter-side cylindrical part 52. Also, when a plurality of slits is formed, the slits are preferably formed at substantially equally spaced intervals in the circumferential direction.

### (Fourth Embodiment)

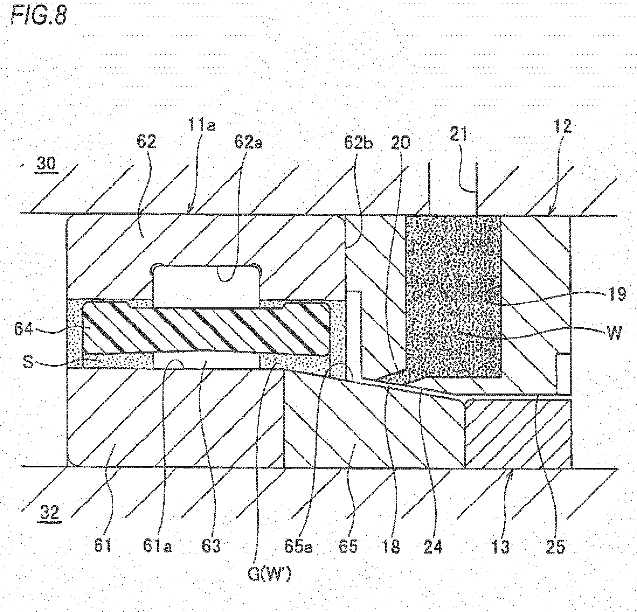

Subsequently, a bearing device of a fourth embodiment is described with reference to FIG. 8.

In the fourth embodiment, a cylindrical roller bearing 11a is used as the rolling bearing. The cylindrical roller bearing 11a includes an inner ring 61 having an inner raceway surface 61a on an outer peripheral surface thereof, an outer ring 62 having an outer raceway surface 62a on an inner peripheral surface thereof, and a plurality of rollers 64 held in a retainer 64 and arranged to be freely rollable between the inner raceway surface 61 a and the outer raceway surface 62a. Also, the outer ring spacer 12 having the lubricant reservoir 19 is arranged to be in contact with an axial end face 62b of the outer ring 62.

An axial dimension of the inner ring 61 is smaller than an axial dimension of the outer ring 62, a second inner ring spacer 65 corresponding to the inner ring spacer of the present invention is arranged in the vicinity of the inner ring 61, and the first inner ring spacer 13 is arranged in the vicinity of the second inner ring spacer 65. One axial end face (a right end face in FIG. 8) of the inner ring 61 is located at a position closer to an axially central portion of the outer ring 62 than one axial end surface of the outer ring 62. The second inner ring spacer 65 has a cylindrical inner peripheral surface and an outer peripheral surface configured as a tapered outer peripheral surface 65a having a conical convex surface.

The tapered outer peripheral surface 65a is also inclined in a direction in which a diameter thereof decreases as a distance from the inner raceway surface 61a increases, and a small diameter-side end portion thereof is located at an outer side, in the axial direction, of the axial end face 62b of the outer ring 62 and enters the inner diameter-side of the outer ring spacer 12.

Therefore, even though the cylindrical roller bearing 11a is used as the rolling bearing, when the wax-based lubricant W is liquefied, the wax-based lubricant W can be supplied into the bearing space S by the centrifugal force to be applied to the tapered outer peripheral surface 65a, the capillary action of the labyrinth gap 18, and the negative pressure action due to the difference of the peripheral speeds resulting from the large and small diameters.

The other configurations and operational effects are the same as the first embodiment.

Meanwhile, in the bearing device of the fourth embodiment, the outer ring spacer 12 of the first embodiment is adopted. However, the outer ring spacer 12a, 12b of the second or third embodiment may also be adopted.

In the meantime, the present invention is not limited to the respective embodiments and can be appropriately modified and improved.

For example, in the embodiments, the lubricant reservoir 19, 19a, 19b has the annular shape or the truncated conical shape. However, the present invention is not limited thereto. That is, the shape of the lubricant reservoir can be arbitrarily designed inasmuch as it can reserve therein the lubricant.

Also, in the embodiments, the outer ring spacer 12, 12a, 12b adjacent to the angular ball bearing 11 or the cylindrical roller bearing 11a, which are the rolling bearing, are provided with the lubricant reservoir 19, 19a, 19b, and the wax-based lubricant W is reserved therein. However, this configuration can also be applied to rolling bearings of other types.

For example, also in a conical roller bearing having an inclined surface of which a raceway surface is axially inclined, since the air suction phenomenon (so-called, pump action) occurs, like the angular ball bearing 11, the present invention can be favorably applied thereto.

Also, the examples where the bearing device 10 of the present invention is applied to the rolling bearing of the spindle device 40 for a machine tool have been described. However, the present invention is not limited to the spindle device 40 and can also be applied to a rolling bearing of a device configured to rotate at high speed, such as a rolling bearing for a general industrial machine and a rolling bearing for a motor, and the same effects can be achieved.

The subject application is based on a Japanese Patent Application Publication No. 2014-248307 filed on December 8, 2014 and a Japanese Patent Application Publication No. 2015-191192 filed on September 29, 2015, which are herein incorporated by reference.

### Description of Reference Numerals

10: bearing device
11: angular ball bearing (rolling bearing)
12, 12a, 12b: outer ring spacer
13: first inner ring spacer
14: inner ring
14a: inner raceway surface
14c, 65a: tapered outer peripheral surface
15: outer ring
15a: outer raceway surface
15b: counterbore
15c: axial end face
16: ball (rolling element)
18: labyrinth gap
19, 19a, 19b: lubricant reservoir
20: oil feeding hole (oil feeding passage)
23, 65: second inner ring spacer (inner ring spacer)
26, 55: concave groove
58: slit (oil feeding passage)
G: grease
S: bearing space
W: wax-based lubricant
W': other wax-based lubricant

## Claims

1. A bearing device comprising:
a rolling bearing comprising an inner ring having an inner raceway surface on an outer peripheral surface thereof, an outer ring having an outer raceway surface on an inner peripheral surface thereof, and a plurality of rolling elements arranged to be freely rollable between the inner raceway surface and the outer raceway surface, a lubricant being enclosed in a bearing space between the outer peripheral surface of the inner ring and the inner peripheral surface of the outer ring, and
an outer ring spacer arranged to be in contact with an axial end face of the outer ring,
wherein at least one of the inner ring and an inner ring spacer arranged to be in contact with an axial end face of the inner ring is formed with a tapered outer peripheral surface, the tapered outer peripheral surface is inclined in a direction in which a diameter thereof decreases as a distance from the inner raceway surface increases, and a small diameter-side end portion thereof is located at an outer side, in an axial direction, of the axial end face of the outer ring and enters an inner diameter-side of the outer ring spacer,
wherein the outer ring spacer includes a lubricant reservoir and an oil feeding passage configured to communicate with the lubricant reservoir and to open towards the tapered outer peripheral surface, and
wherein a wax-based lubricant, which includes lubricating oil and wax and is changeable, with a liquefaction point, which is a predetermined temperature within a temperature range of 10 to 70 degrees Celsius, as a boundary, between a liquid state above the liquefaction point and a semi-solid state at or below the liquefaction point, is enclosed in the lubricant reservoir.

2. The bearing device according to claim 1,
wherein the oil feeding passage is configured by an oil feeding hole of the outer ring spacer.

3. The bearing device according to claim 1,
wherein the oil feeding passage is configured by a slit extending in the circumferential direction.

4. The bearing device of according to any one of claims 1 to 3,
wherein a labyrinth gap through which the wax-based lubricant can freely circulate is formed between an inner peripheral surface of the outer ring spacer and the tapered outer peripheral surface, and
wherein the wax-based lubricant is supplied from the oil feeding passage into the bearing space through the labyrinth gap.

5. The bearing device according to any one of claims 1 to 4,
wherein the wax-based lubricant is reversibly changeable between the liquid state and the semi-solid state, with the liquefaction point as a boundary.

6. The bearing device according to any one of claims 1 to 5,
wherein other wax-based lubricant, which includes lubricating oil and wax, has a liquefaction point higher than the highest temperature of the rolling bearing, which is assumed upon operation of the bearing device, and is changeable between a liquid state above the liquefaction point and a semi-solid state at or below the liquefaction point, is enclosed in the bearing space.

7. The bearing device according to any one of claims 1 to 5,
wherein grease is enclosed in the bearing space, and
wherein the grease includes base oil having affinity and infiltration with the wax-based lubricant.
